# EUROPEAN PATENT APPLICATION

(11) **EP 3 599 737 A1**
(43) Date of publication of application: **29.01.2020**
(21) Application number: 18306005.2
(22) Date of filing: 24.07.2018
(51) Int. Cl.: H04L 9/08

(54) **METHOD TO CREATE A PRIMARY CRYPTOGRAPHIC KEY WITH OWNER-DEFINED TRANSFORMATION RULES**

(71) Applicant: GEMALTO SA, 92190 Meudon (FR)
(72) Inventor: LACOUTURE, Dominique, 92190 Meudon (FR); LAMBERT, Patrick, 92190 Meudon (FR); ROCHA FURTADO, Daniel, 92190 Meudon (FR); DETCHEVERRY, Frank, 92190 Meudon (FR)
(74) Representative: Thomas, Christine Marie Catherine

(57) **Abstract**

The present invention relates to a method to allow the owner of a key value (VKEY1) to create a primary cryptographic key (KEY1) from the key value (VKEY1) intended to be used in at least one cryptographic transformation operation (EXP, DV, IMP...) which results in at least a secondary key (KEY2), the cryptographic transformation operation being performed in a secure device (SD) where a user (USR) triggers the cryptographic transformation operation by defining cryptographic transformation operation parameters (PAR) and/or cryptographic attributes (ATT) for the secondary key (KEY2) in a request template (RQT), said method comprising the step to insert, in the primary cryptographic key (KEY1), at least one cryptographic transformation operation restriction template (RST) in terms of allowed cryptographic transformation operation parameters (PAR) and/or allowed cryptographic attributes (ATT) for the secondary key (KEY2).

## Description

### FIELD OF THE INVENTION

The present invention relates to a method to create a primary cryptographic key intended to be used in at least one cryptographic transformation operation triggered by a user and which results in at least a secondary key, the cryptographic transformation operation being performed in a secure device where the user triggers the cryptographic transformation operation by defining cryptographic transformation operation parameters and/or cryptographic attributes for the secondary key in a request template.

The invention allows an owner of a key value to create a primary cryptographic key from the key value intended to be used in at least one cryptographic transformation operation.

The invention also pertains to a key obtained using said method and to a secure device adapted to use the cryptographic key obtained with the invention.

### BACKGROUND OF THE INVENTION

Today, in cryptographic systems, each key has a set of attributes, composed by properties, defining what can be done to the key, and usages, defining what the key can be used for.

For instance the PKCS#11 standard specifies the following attributes for secrets, amongst others, properties like "ID" or "Sensitive" and usages, like Derive, Encrypt, Decrypt, Sign, Verify, Allowed mechanisms.

Some specific cryptographic transformation operations on a key, such as export and derivation, result in a new key, with its own key value and set of attributes. In current systems, the user who triggers such a cryptographic transformation operation is responsible to specify these new attributes. The creator or owner of the key cannot have any control on the so decided attributes.

In PKCS#11, the user has to provide a template describing the wanted attributes when calling such cryptographic transformation operations.

While it is acceptable in mainstream cryptographic situations where the owner and the user are the same entity, it can lead to potential security problems as soon as these two roles, owner and user, are impersonated by different entities: the owner has no control on potential new keys' attributes. This can be harmful in different contexts.

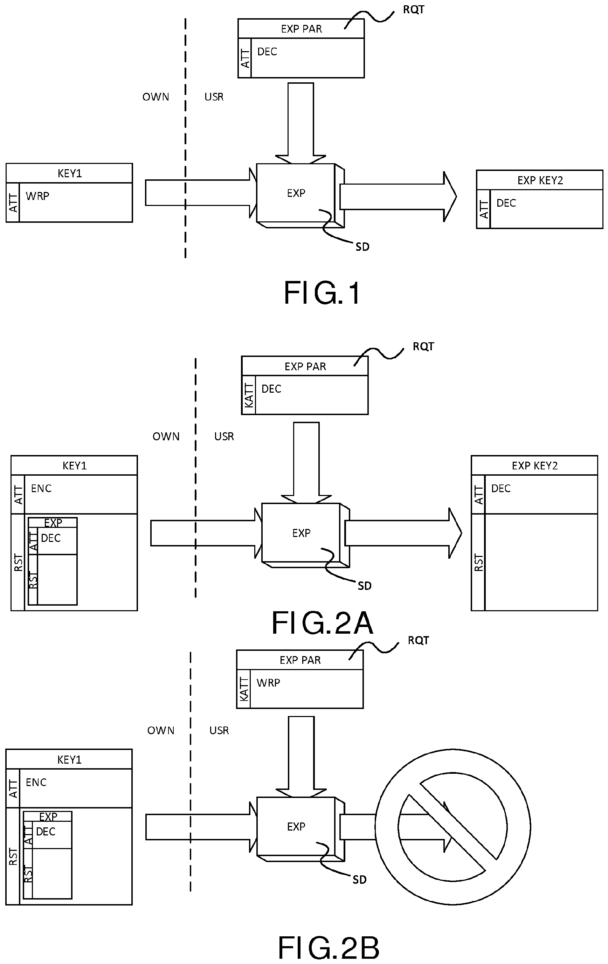

At key export, the user USR can change the key attributes. This situation is schematically shown on figure 1 where a primary key KEY1 created by an owner OWN has wrap WRP for attribute ATT. This key KEY1 can thus be used in wrapping mechanisms. It can also be exported. In the context of the invention, the key KEY1 is available at a secure device SD owned by a user USR which is different from the owner OWN. The user USR can, for example, proceed to an export EXP of the key KEY1 while changing the attribute of the resulting exported key EXP KEY2 (secondary key). To trigger this operation, the user USR fills a request template RQT including a chosen attribute ATT for the key resulting from the export EXP. This attribute ATT is here decryption DEC, instead of wrap WRP as it should normally be the case. An attacker will thus be able to mount an attack enabling to retrieve any key protected by the key KEY1.

In various processes, business-oriented cryptographic schemes often ask for several specific key derivations, for example with fixed diversifiers, based on the same derivation key, where each derived key is used for a specific purpose in the process. Thus, with all currently available cryptographic systems, an attacker can easily switch the diversifier and the attributes used to obtain these derived keys, for instance, use diversifier A with attributes B. The attacker can thus easily mount an attack to compromise secrets protected by one of the derived key by obtaining the same derived key value, but with the wrong key usage, for example decryption instead of key unwrap or signature.

Another issue is encountered with schemes asking for two successive derivations based on encryption functions. For example, a situation where a primary key must be derived twice before the derivation result can be used. The first primary key is derived with a first diversifier DA to get a derivation intermediate key and then the derivation intermediate key is derived with a second diversifier to get a final key. In this case, one attacker can easily retrieve the final key value using the following sequence:
- deriving the first primary key with first diversifier but using encrypting attributes instead of derivation attributes. Consequently, the intermediate key can then be used as an encryption key;
- encrypting the second diversifier using the intermediate key, using the same encryption function as used by the derivation. The result is the final key itself.

The attacker thus access the value of the encryption final key and can compromise any secret protected by it.

Other contexts exist with exportation scheme and further alternative and advantageous solutions would, accordingly, be desirable in the art.

### SUMMARY OF THE INVENTION

The present invention aims at avoiding the above-mentioned malicious attacks.

The present invention is defined, in its broadest sense, as a method to create a primary cryptographic key with owner-defined transformation rules intended to be used in at least one cryptographic transformation operation triggered by a user and which results in at least a secondary key, the cryptographic transformation operation being performed in a secure device where the user triggers the cryptographic transformation operation by defining cryptographic transformation operation parameters and/or cryptographic attributes for the secondary key in a request template, said method comprising the step to insert, by the owner, in the primary cryptographic key, at least an attribute stating the usage of the primary cryptographic key and one cryptographic transformation operation restriction template comprising allowed cryptographic transformation operation parameters and/or allowed cryptographic attributes for the secondary key, said restriction template being then read in the secure device, once a cryptographic transformation operation is triggered by the user with a request template and before performing the cryptographic transformation operation, the cryptographic transformation operation being performed by the secure device only in the case where the user-defined cryptographic transformation operation parameters and/or cryptographic attributes in the request template correspond to the ones allowed in the restriction template inserted in the primary key, the secondary key being thus necessarily obtained while using, in the cryptographic transformation operation as triggered by the user, one cryptographic transformation operation parameter as allowed in restriction template or the secondary key having thus necessarily one cryptographic attribute as allowed in restriction template.

The invention allows the creator and owner of the primary key to specify, during creation of this primary key, what could be the resulting attributes of any new key obtained by transformation cryptographic transformation operations using the primary key. It is here noted that the used terminology "primary", "secondary" does not make reference to specific properties that can be thus designated in standard or other context. Those terms are for the ease of reading the claims and to help in the understanding of the invention. "Primary" and "secondary" are defined as the input and output of an operation. The "secondary" key of a first operation can become the "primary" key of any following operation. It is here further noted that the secondary key can have the same value of the primary one, typically in case of exportation of the key while metadata like attributes are different.

Attributes for the secondary key stands for any attributes the secondary key may have: derivation key, encryption key, attributes' heritage from the primary key, key owner identifier etc... Operation stands for the designation of the operation: derivation, exportation, importation, copy, backup, wrapping and Operation parameters stands for the parameters to be used during the operation (like diversifiers, date limit for operations etc)

In a preferred embodiment, the cryptographic transformation operation which results in a secondary key is a key exportation/importation or a key derivation or a copy or a backup or a wrapping.

These operations are taking great advantage of the invention as they can precisely lead to misusage of the primary key to produce secondary key which may be of help in attack process.

The invention consists in adding, when needed, a collection of allowed operation parameters/attribute to the key for a given operation.

Attributes and operation parameters provided by a user for a given operation are then compared to the list of operation parameters/attribute allowed in the restriction template in the primary key:
- if the key has a matching operation/attribute in the restriction template, then the operation is executed;
- if the key has at least one allowed operation parameters/attribute for this operation in the restriction template, but no match with the operation parameters/attributes given by the user, then the operation is refused;
- if the key has no allowed attribute in the restriction template for an operation otherwise allowed by the key's attributes, then the behavior is as usual: the operation is allowed, and user-provided attributes are applied to the resulting key.

The invention gives the primary key new properties which solve the above presented security problems. With the invention, a key can only be transformed using pre-determined attributes specified at key's creation by its owner, so the scheme's security is no longer based on trusting the caller but is instead handled natively by the cryptographic system following the constraints specified by the key's creator.

So this new property of a key solves the security problems outlined above.

In a specific embodiment, allowed cryptographic attributes for the secondary key includes at least one usage of the secondary key.

For instance, a primary key could be specified such as it could only be derived into an encryption key.

The same operation can be potentially linked to several different attributes sets for the secondary key, such that a key can have several restriction templates restricting a same operation but with different attributes for the obtained secondary key.

For instance, a primary key could be specified such as it could only be derived either into an encryption key or into a signature key.

According to another specific embodiment, allowed cryptographic attributes for the secondary key include an attributes heritage attribute setting that the attributes of the secondary are inherited from the primary key.

This embodiment enables to simply transfer the attribute of the primary key to the secondary key.

With the invention, each allowed operation through several restriction template can specify allowed parameters for this operation. These parameters are specific to the operation used, i.e. export, derivation..., and to the cryptographic mechanism employed. These parameters can be business-specific

According to another specific embodiment, the cryptographic transformation operation being a derivation, the allowed cryptographic transformation operation parameters include at least a diversifier or a diversifier pattern.

For instance, the cryptographic transformation operation being a derivation, the derivation restriction includes at least a diversifier restriction. Then the secure device will refuse to perform the operation as soon as the diversifier is not conform to the provided restrictions. It is here further noted that the term "diversifier" indeed refers to diversification patterns as the listing of all possible diversifiers would be often not possible. For example a diversification pattern like: 80 01 XX XX XX XX XX 7F where 'X' can take any value. At opposite these diversification patterns can also refer to a rejected mask of diversifiers that should not be accepted for the operation.

Thus, a key derivation would be authorized only if the user gives specific derivation parameters and desired key attributes.

According to another specific embodiment, the allowed cryptographic transformation operation parameters include at least a limit date for operation.

In this case, the restriction applies to the operation to be performed itself and prevents the execution of the invention if the limit date is exceeded.

According to another embodiment, allowed cryptographic attributes for
the secondary key include an owner identifier.

The owner identifier to be an attribute of the secondary key enables to track the origin of the secondary key.

According to an advantageous embodiment, the restriction template comprises several levels.

Such an embodiment enables the creator of the key to control a whole chain of use of the primary key in any secure device wherever the primary key, the secondary key or whichever successive key will be used. Here the operations can be successively performed in a same and single secure device or in several of such devices.

Thus in the invention, nested restriction templates are also possible, meaning that one restriction template can contain its own set of allowed restriction templates that will be applied to the next resulting key.

Advantageously, the restriction comprises several levels of mixed cryptographic transformation operations chosen among derivation, exportation, importation, copy, backup, wrapping.

Such a feature enables to control the different levels of use of the primary key in third parties' secure device(s). The entire chain of use of the primary key can be monitored since the creation of the primary key by the owner. This is very interesting in term of trust the owner can put in the key. It also enables to take a technical advantage on other kind of key management systems which are necessarily less secure. In an advantageous application, the restriction comprises multiple levels of cryptographic transformation operations. Thus, a key could be specified such as it could only be derived into a key that could only be derived into an encryption key.

Also, according to a specific application, the restriction template comprises two levels corresponding to a double derivation.

Another specific application is such that the restriction template comprises several levels comprising at least an exportation/importation of the primary key.

The present invention also relates to a primary cryptographic key with owner-defined transformation rules obtained according to a method of any one of preceding claims and being thus adapted to be used in at least one cryptographic transformation operation which results in at least a secondary key, said cryptographic key comprising at least an attribute stating the usage of the cryptographic key and at least an additional restriction template comprising allowed cryptographic transformation operation parameters and/or allowed cryptographic attributes for the secondary key, said restriction template and said attribute being then read in the secure device before performing a cryptographic transformation operation which results in at least a secondary key after trigger by a user with a request template, the cryptographic transformation operation being performed by the secure device only in the case where the user-defined cryptographic transformation operation parameters and/or cryptographic attributes in the request template correspond to the ones allowed in the restriction template inserted in the primary key, the secondary key being thus necessarily obtained while using, in the cryptographic transformation operation as triggered by the user, one cryptographic transformation operation parameter as allowed in restriction template or the secondary key having thus necessarily one cryptographic attribute as allowed in restriction template.

Such a cryptographic key constructed according to the invention can be deeply trusted by the owner as any malicious use is prohibited directly and naturally from the structure and the content of the key itself. The usage of the key is thus always under the control of the owner.

This invention also relates to a secure device adapted to receive primary cryptographic keys from an owner, said secure device comprising at least a cryptographic module adapted to perform cryptographic transformation operation using received primary cryptographic keys, said cryptographic transformation operations being triggered by a user while providing cryptographic transformation operations parameters and/or cryptographic attributes for a secondary key to be obtained from said primary key in a request template, said secure device further comprising a request template module adapted to receive a request template filled by a user of the secure device, an operation triggering module adapted to read the content of the received primary cryptographic key and the content of the request template received from the user and to compare these contents and to send a triggering signal to the cryptographic module only in the case where the user-defined cryptographic transformation operation parameters and/or cryptographic attributes in the request template correspond to the ones allowed in the restriction template inserted in the primary key, the secondary key being thus necessarily obtained while using, in the cryptographic transformation operation as triggered by the user, one cryptographic transformation operation parameter as allowed in restriction template or the secondary key having thus necessarily one cryptographic attribute as allowed in restriction template.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows schematically a situation of the prior art where an attacker can mount an attack;
- Figures 2A and 2B show the same situation as on figure 1 when the invention is implemented;
- Figures 3A and 3B show another situation where the invention is implemented;
- Figure 4 shows another situation of double derivation where the invention is implemented;
- Figure 5 shows another situation where the invention is implemented;
- Figures 6A and 6B schematically shows, respectively, a generic and an exemplary flow chart of the method of the invention; and
- Figure 7 schematically shows a secure device of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

Figure 2A shows a key KEY1 as created according to the invention. This key is typically created onboard a Hardware Security Module. In addition to the classical attribute ATT which is here encryption ENC, it further comprises restriction template(s) RST. Those restriction templates RST list restrictions to be applied to any key that can result from a specific operation to be performed by a secure device with this primary key KEY1.

Here the key KEY1 is created by inserting a restriction template RST for any export operation EXP. This restriction lists an attribute ATT possible for the key to be obtained, here decryption DEC.

In the shown example an export operation EXP is triggered by a user USR using a request template RQT at a secure device SD. While receiving the request template RQT, the secure device SD reads the restriction template RST in the key KEY1.

The restriction template RST here limits the exportation EXP of the key KEY1. The usage for a key to be exported is restricted to a decryption DEC usage. It appears in the restriction template RST as shown on figures 2A and 2B.

Two situations can here be encountered as shown on figure 2A and 2B. In the first one, shown on figure 2A, the user USR filled the request template RQT with an expected attribute being here DEC (i.e. listed in the restriction) as parameter EXP PAR in the request template RST for a triggered operation of exporting EXP the key KEY1. Then the secure device SD performs the export operation which results in an exported decryption key EXP KEY2 having decryption DEC as attribute ATT.

In the second situation shown on figure 2B, the user USR filled the request template RQT with an attribute, here wrapping WRP, which is not listed in the restriction template RST as parameter ATT for the export operation EXP. In this case, the secure device SD is such that, the attribute requested by the user, here wrapping WRP, not being in the list in the restriction template RST for export EXP, the operation is not performed by the secure device SD as shown on figure 2B.

Thus with the invention, the primary key KEY1 can only encrypt or be exported as a decryption key. So when appropriate key attributes are requested by the user USR during an export operation, a decryption key will be obtained as shown on figure 2A. But if attributes provided are not in the set of allowed operation/attributes couples of this key for this operation, then it will fail as shown on figure 2B.

It is here noted that the restriction can also be a list of prohibited attribute(s) or operation parameter(s) instead of allowed attribute(s) or operation parameter(s) while remaining in the scope of the invention.

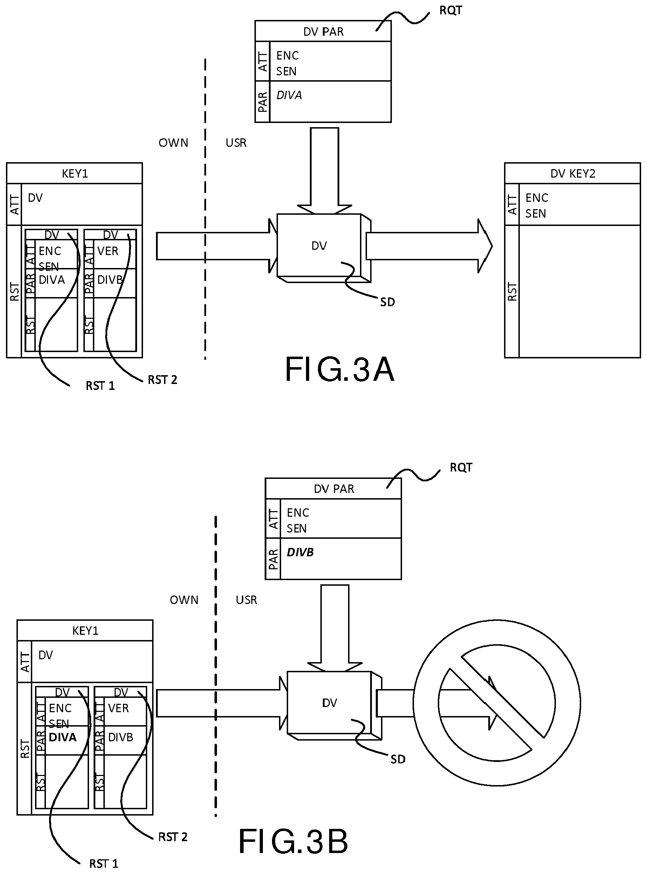

Figures 3A and 3B show another example where the invention is implemented. In this example, a primary key KEY1 is created with a derivation attribute DV. This key KEY1 is thus dedicated to be derived. This already restricts the use of the key KEY1 in a secure device SD to derivation. However, in the prior art, a user USR can request a primary key KEY1 to be derived in a secondary key having any kind of usage. Any differentiator can also be used. It renders the derivation by a user USR different from the owner OWN of the primary key KEY1 not secured.

With the invention, a derivation with any kind of usage for the obtained key or any kind of differentiator will not be possible as the parameters of the derivation operation can be restricted as well as the attributes of the obtained key.

As shown on figure 3A, in the invention, a key KEY1 is created with the insertion of several attributes stored in several restriction templates RST readable by a secure device SD as in the case of figure 2.

Here two restrictions templates RST1 and RST2 are inserted in the key KEY1. The first restriction template RST1 concerns a derivation operation to create a key having a usage of encryption ENC and a sensitive property SEN. The second restriction RST2 concerns the derivation towards a key having verification VER as usage.

At this level of restriction, the secure device SD will refuse to derive the primary key KEY1 in a derivation key as the derivation usage is not allowed by the restrictions.

The example of figure 3A proposes a second level of restriction by qualifying a parameter PAR to be used in the derivation. Here the parameter is a possible diversifier pattern to be used for each of the two possible operations.

Concerning the derivation into an encryption key, any other diversifier not matching the diversifier pattern DIVA will lead to a refused operation in a secure device SD of the invention. This is illustrated on figure 3B where the user USR filled the template to request a sensitive encryption key to be derived from primary key KEY1 using a diversifier DIVB. As this diversifier DIVB does not match the diversifier pattern DIVA present in the restriction RST1 relative to the derivation operation using encryption ENC and sensitive SEN attributes, the operation is refused by the secure device SD.

Also if ever a derivation towards a verification key VER is requested by the user USR using a request template RQT filled with a differentiator DIVA, the request will be refused.

Thus in the implementation shown on figure 3, the main/primary key can only be derived into either a sensitive encryption key or an exportable signature verification key, depending on the derivation parameters given in the request template. So when appropriate key attributes and operation parameters are provided by the user USR while triggering the derivation operation DV as shown on figure 3A, either one of the possible keys can be obtained. Trying to switch attributes and operation parameters between the two possible restriction templates RQT1 or RQT2 would fail as shown on figure 3B.

With the invention, in the example of figures 3A and 3B, the primary key KEY1 could be derived only in two kinds of key: a secondary key DV KEY2 having encryption ENC and sensitive SEN as attributes only in the case where the requested diversifier is DIVA (case of figure 3A), or a secondary key having verification VER as attribute only when the requested diversifier is DIVB.

Any other requests will be refused as the one of figure 3B, where the template requests the use of DIVB as diversifier to obtain an encryption ENC and sensitive SEN key.

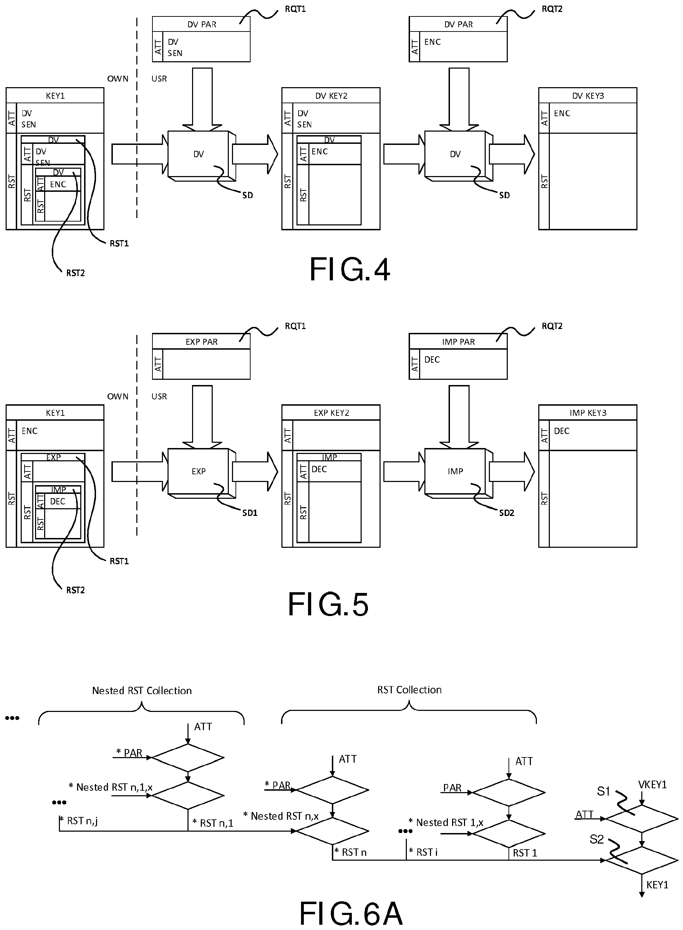

Figure 4 represents another example where the invention is implemented in a double derivation context. Here a primary key KEY1 is created with a two levels restriction template RST regarding the derivation possibility of KEY1 which is a sensitive derivation key.

The first restriction RST1 concerns the possibilities regarding the possible usages of a secondary key DV KEY2 which will be generated in the cryptographic transformation operation authorized by the attribute of the primary key KEY1.

Another restriction RST2 inserted in the first restriction template RST1 gives the attributes according to the invention for a third key DV KEY3 which will be generated using the secondary key DV KEY2 generated according to the first restriction template RST1.

In this example, a user USR fills a template RQT1 for a derivation operation DV for the primary key KEY1 to be derived in a secondary key DV KEY2 having an attribute of derivation DV and a sensitive SEN property. In the case where the first restriction RST1 comprises this attribute DV for the derived key and this property SEN, the derivation is performed by the secure device SD operated by the user USR. Otherwise the derivation operation is refused by the secure device SD.

Then, the same user USR or even another user using the same or a different secure device SD fills a new request template RQT2 for a derivation operation DV for the secondary key DV KEY2 to be derived in a third key DV KEY3 having an attribute of encryption ENC. In the case where the second restriction template RST2 comprises this attribute ENC for the derived key, the derivation is performed by the secure device SD operated by the user USR. Otherwise the derivation operation is refused by the secure device SD.

So, in the implementation of figure 4, the main/primary key KEY1 can only be derived into a sensitive key that can itself only be derived into an exportable encryption key.

Figure 5 shows a last example of implementation of the invention. Here a primary key KEY1 having an encryption attribute ENC can be exported using a secure device SD1 operated by a user USR. For this purpose, the user USR fills a request template RQT1 with export parameters EXP PAR. Here no attribute are specified and the obtained key will thus not have any usage except that it can be imported. It can be seen here how the invention enables to strongly control, at the creator place, the diverse usage of the key and how the invention is useful for trusting the subsequent possible uses of the obtained keys. As it corresponds to what is inserted in the first level of restriction template RST1 in the primary key KEY1, the export operation is performed by the secure device SD1. The obtained key EXP KEY2 contains a further restriction template RST2 which specifies which kind of key can be obtained while then importing the key EXP KEY2, here a decryption key IMP KEY3. If ever the user USR of the secure device SD2 for the second operation fills a template while specifying another attribute ATT, the secure device SD2 will not perform the operation. It is noted here that the secure device can also be a same and single secure device SD.

With this implementation, the primary key KEY1 which is an encryption key will necessarily become, when exported, a key without specific usage that can only be imported as a decryption key.

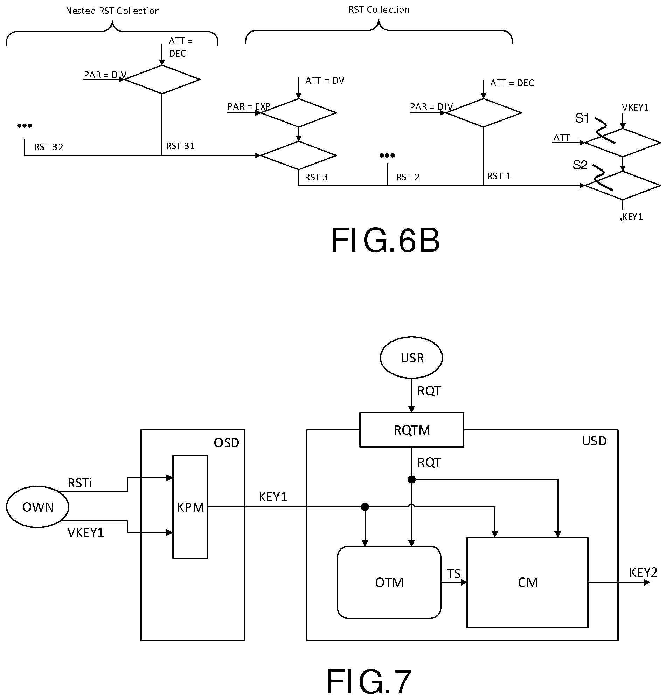

Figure 6 schematically shows the method of the invention. A key value VKEY1 is provided at the entrance of the method of the invention. The cryptographic key of the invention is generally created on board a secure device of the owner/creator of the key, typically a Hardware Security Module (HSM). A classical first step S1 is performed by associating at least an attribute ATT to the key value VKEY1. It is here noted that several attributes can be here inserted in the final key KEY1 and that properties can also be inserted. Such attribute directly define what can be done with the primary key KEY1. For example an encryption attribute ENC will enable a secure device to encrypt data or to export the primary key KEY1. It will not be allowed to make any derivation with this key. This is currently defined in standards concerning the construction of cryptographic key.

Then the original step S2 of the invention is performed by inserting at least a restriction template RST having allowed operation parameter PAR and/or allowed attribute ATT to be applied to the creation of any secondary key and to the secondary key that would result from the use of the created primary key KEY1 while performing operations compatible with the attribute(s) ATT and the parameters PAR of the operation in the restriction template(s) RST of the key KEY1.

Figure 6A schematically shows the possibilities offered by the invention in terms of levels of operations and of quantity of restrictions at a same level of operation. It shows n restrictions RSTi in the RST collection, inserted at a first level. This corresponds for example to the case shown on figure 3. On figure 6A, two of the restrictions at this first level are also restricted at a second level by a nested RST1,x and nested RSTn,x. In the left restriction RSTn, a nested RST collection is inserted, itself constituted by several restrictions RSTn,1 to RSTn,j. Such a nesting of restrictions corresponds for example to the exemplary cases shown on figures 4 and 5. As soon as one restriction is at least included in the primary key KEY1, other restrictions tagged with * remain optional. As many restrictions as wished can be inserted, this is illustrated by the three points on figure 6A.

Figure 6B shows a case where two levels of restrictions are inserted in key KEY1. At a first level concerning the first operation to be applied to the KEY1, three restrictions are found. Contemplating the case where the attribute ATT given to the key KEY1 is a derivation attribute, RST1 corresponds for example to a restriction on the differentiator and to a decryption DEC usage for the secondary key in the restriction template RST1. RST2 can be a restriction template concerning another differentiator pattern for a decryption key to be obtained. RST3 can be a restriction template concerning the exportation EXP of KEY1 authorizing only specific the KEY1 to be exported in a derivation key (ATT=DV). Said obtained derivation key KEY2 being further restricted by nested restriction templates RST31 and RST32 for the operation parameters (diversifiers ...) that can be applied on the derivation or exportation and for the attribute of the key that will be obtained.

Figure 7 shows a user secure device USD of the invention. It is adapted to receive a key KEY1 having a set of restriction templates RSTi from, typically another secure device OSD owned by an owner OWN. In the owner secure device OSD, a key provisioning module KPM transforms a key value VKEY1 and a set of restriction templates RSTi in a primary cryptographic key KEY1 according to the invention. The user secure device USD comprises a cryptographic module CM adapted to perform cryptographic transformation operation using cryptographic keys KEY1 as received at the key provision module KPM. Said cryptographic transformation operations are triggered by a user USR by providing cryptographic transformation operations parameters in a request template RQT.

The secure device SD further comprises a request template module RQTM adapted to receive the request template RQT filled by the user USR of the secure device SD. It comprises also an operation triggering module OTM adapted to read the content of the received cryptographic key KEY1 and the content of the request template RQT received from the user USR. It is further adapted to compare these contents, more particularly the restriction templates RST having restrictions on the cryptographic transformation operation parameters and/or cryptographic attributes and the operation parameters and/or cryptographic attributes as present in the request template RQT. At last the operation triggering module OTM is adapted to send a triggering signal TS to the cryptographic module CM only in the case where the user-defined cryptographic transformation operation parameters and/or cryptographic attributes in the request template RQT correspond to one of the ones allowed in the restriction templates RST inserted in the primary key KEY1.

With this invention, the key owner can specify the attributes of all sub-keys that can be produced from this key. Such a features is indeed mandatory for protecting the secrets of the owner of the key or of any other users in the chain of use of a key or of keys obtained from a key. It enables to strongly protect secrets at several levels. The invention can be easily adapted to several of the current Key Management standards like PKCS11 or KMIP and others. The invention also enables to enforce business-specific parameters in cryptographic transformation operations, among which the diversifiers.

In the above detailed description, reference is made to the accompanying drawings that show, by way of illustration, specific embodiments in which the invention may be practiced. These embodiments are described in sufficient detail to enable those skilled in the art to practice the invention.

It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention.

## Claims

1. Method to create a primary cryptographic key (KEY1) with owner-defined transformation rules intended to be used in at least one cryptographic transformation operation (EXP, DV, WRP, IMP...) triggered by a user and which results in at least a secondary key (KEY2), the cryptographic transformation operation being performed in a secure device (SD) where the user (USR) triggers the cryptographic transformation operation by defining cryptographic transformation operation parameters (PAR) and/or cryptographic attributes (ATT) for the secondary key (KEY2) in a request template (RST), said method comprising the step to insert, by the owner, in the primary cryptographic key (KEY1), at least an attribute (ATT) stating the usage of the primary cryptographic key (KEY1) and one cryptographic transformation operation restriction template (RST) comprising allowed cryptographic transformation operation parameters (PAR) and/or allowed cryptographic attributes (ATT) for the secondary key (KEY2), said restriction template (RST) being then read in the secure device (SD), once a cryptographic transformation operation is triggered by the user (USR) with a request template (RQT) and before performing the cryptographic transformation operation, the cryptographic transformation operation being performed by the secure device (SD) only in the case where the user-defined cryptographic transformation operation parameters (PAR) and/or cryptographic attributes (ATT) in the request template (RQT) correspond to the ones allowed in the restriction template (RST) inserted in the primary key (KEY1), the secondary key (KEY2) being thus necessarily obtained while using, in the cryptographic transformation operation as triggered by the user (USR), one cryptographic transformation operation parameter (PAR) as allowed in restriction template (RST) or the secondary key (KEY2) having thus necessarily one cryptographic attribute (ATT) as allowed in restriction template (RST).

2. Method according to claim 1, wherein the cryptographic transformation operation which results in a secondary key (KEY2) is a key exportation/importation (EXP,IMP) or a key derivation (DV) or a key copy or a key backup or a key wrapping (WRP).

3. Method according to claim 1, wherein allowed cryptographic attributes (ATT) for the secondary key (KEY2) includes at least one usage of the secondary key (KEY2).

4. Method according to claim 1, wherein allowed cryptographic attributes (ATT) for the secondary key (KEY2) include an attributes heritage attribute setting that the attributes of the secondary are inherited from the primary key.

5. Method according to claim 1, wherein, the cryptographic transformation operation being a derivation (DV), the allowed cryptographic transformation operation parameters (PAR) include at least a diversifier or a diversifier pattern (DIV) used as an allowed or rejected mask pattern.

6. Method according to claim 1, wherein the allowed cryptographic transformation operation parameters (PAR) include at least a limit date for operation.

7. Method according to claim 1, wherein allowed cryptographic attributes (ATT) for the secondary key (KEY2) include an owner identifier.

8. Method according to claim 1, wherein the restriction template (RST) comprises several levels.

9. Method according to claim 6, wherein the restriction template (RST) comprises several levels of cryptographic transformation operations chosen among derivation, exportation, importation, copy, backup, wrapping.

10. Method according to claim 6, wherein the restriction template (RST) comprises at least two levels corresponding to a double derivation.

11. Method according to claim 6, wherein the restriction template (RST) comprises several levels comprising at least an exportation/importation of the primary key (KEY1).

12. Primary cryptographic key (KEY1) with owner-defined transformation rules obtained according to a method of any one of preceding claims and being thus adapted to be used in at least one cryptographic transformation operation (EXP, DV, IMP, WRP...) which results in at least a secondary key (KEY2), said cryptographic key (KEY1) comprising at least an attribute (ATT) stating the usage of the cryptographic key (KEY1) and at least an additional restriction template (RST) comprising allowed cryptographic transformation operation parameters (PAR) and/or allowed cryptographic attributes (ATT) for the secondary key (KEY2), said restriction template (RST) and said attribute (ATT) being then read in the secure device (SD) before performing a cryptographic transformation operation which results in at least a secondary key (KEY2) after trigger by a user (USR) with a request template (RQT), the cryptographic transformation operation being performed by the secure device (SD) only in the case where the user-defined cryptographic transformation operation parameters (PAR) and/or cryptographic attributes (ATT) in the request template (RQT) correspond to the ones allowed in the restriction template (RST) inserted in the primary key (KEY1), the secondary key (KEY2) being thus necessarily obtained while using, in the cryptographic transformation operation as triggered by the user (USR), one cryptographic transformation operation parameter (PAR) as allowed in restriction template (RST) or the secondary key (KEY2) having thus necessarily one cryptographic attribute (ATT) as allowed in restriction template (RST).

13. Secure device (SD) adapted to receive primary cryptographic keys (KEY1) from an owner (OWN), said secure device comprising at least a cryptographic module (CM) adapted to perform cryptographic transformation operation (EXP, DV, IMP, WRP...) using received cryptographic primary keys, said cryptographic transformation operations being triggered by a user (USR) while providing cryptographic transformation operations parameters (PAR) and/or cryptographic attributes (ATT) for a secondary key (KEY2) to be obtained from said primary key (KEY1) in a request template (RQT), said secure device (SD) further comprising a request template module (RQTM) adapted to receive a request template (RQT) filled by a user (USR) of the secure device (SD), an operation triggering module (OTM) adapted to read the content of the primary cryptographic key (KEY1) as received and the content of the request template (RQT) received from the user (USR) and to compare these contents and to send a triggering signal (TS) to the cryptographic module (CM) only in the case where the user-defined cryptographic transformation operation parameters (PAR) and/or cryptographic attributes (ATT) in the request template (RQT) correspond to the ones allowed in the restriction template (RST) inserted in the primary key (KEY1), the secondary key (KEY2) being thus necessarily obtained while using, in the cryptographic transformation operation as triggered by the user (USR), one cryptographic transformation operation parameter (PAR) as allowed in restriction template (RST) or the secondary key (KEY2) having thus necessarily one cryptographic attribute (ATT) as allowed in restriction template (RST).
